# EUROPÄISCHE PATENTSCHRIFT

(11) **EP 0 622 177 B1**
(45) Veröffentlichungstag und Bekanntmachung des Hinweises auf die Patenterteilung: **01.07.1998**
(21) Anmeldenummer: 94106276.2
(22) Anmeldetag: 22.04.1994
(51) Int. Cl.: B32B 5/24, B32B 27/32, B60R 13/01, G10K 11/16

(54) **Geformter Schichtkörper, insbesondere Innenauskleidungsteil für Kraftfahrzeuge und Verfahren zu seiner Herstellung**
Moulded multilayered product, in particular an internal liner for vehicles, and method for its production
Produit stratifié moulé, notamment revêtement intérieur de véhicule et procédé pour sa fabrication

(30) Priorität: 28.04.1993 DE 4313910
(43) Veröffentlichungstag der Anmeldung: 02.11.1994
(73) Patentinhaber: MAGNA GEORG NÄHER GmbH, 71706 Markgröningen (DE)
(72) Erfinder: Hess, Dieter, Troy, Mi. 48083 (US); Maysenhölder, Rolf, D-74354 Besigheim (DE); Stricker, Klaus, D-74321 Bietigheim-Bissingen (DE)
(74) Vertreter: Patentanwälte Ruff, Beier, Schöndorf und Mütschele

(56) Entgegenhaltungen:
- EP-A- 0 403 187
- EP-A- 0 453 877
- DE-A- 2 706 446
- DE-U- 8 804 962
- DE-U- 8 909 952
- GB-A- 2 025 833

## Beschreibung

Die Erfindung betrifft einen geformten Schichtkörper, insbesondere ein Innenauskleidungsteil für Kraftfahrzeuge, mit einer Trägerschicht aus einer im wesentlichen steifen, mindestens an Flächenbereichen Perforationen aufweisenden, Folie aus einem thermoplastischen Kunststoff und mindestens einem Oberflächenbelag aus einem textilen Flächengebilde sowie ein Verfahren zu seiner Herstellung.

Innenauskleidungsteile für Kraftfahrzeuge bestehen häufig aus einem Schichtkörper, der entsprechend den Wandungen des Innenraumes geformt ist und an seiner dem Innenraum zugewandten Seite einen textilen Belag, insbesondere in Form eines Nadelvlieses, aufweist. Zur Herstellung solcher Innenauskleidungsteile werden thermoplastische Kunststoffe, insbesondere Polypropylen, zu Folien extrudiert, wobei auf die heiße Folie der textile Belag unmittelbar aufkaschiert wird, wobei die Fasern des Nadelvlieses in die noch weiche Masse der Folie eingedrückt und in diese eingebettet werden. Auch andere Verfahren zur Verbindung eines textilen Flächengebildes mit einer selbsttragenden Folie aus thermoplastischem Material sind bekannt. Die DE-A-27 06 446 beschreibt einen geformten Innenbelag in Kraftfahrzeugen, der insbesondere als Himmel oder Bodenbelag für Kraftfahrzeuge verwendbar ist. In der Druckschrift wird zwar davon gesprochen, daß der geformte Innenbelag gute schallabsorbierende Eigenschaften aufweisen soll. Die entsprechende Lehre erschöpft sich aber darin, daß der Innenbelag aus einer Deckschicht mit schallabsorbierenden Eigenschaften, einer damit verbundenen perforierten Folie oder Platte aus thermoplastischem Kunststoff und ggf. einer an der Rückseite der Folie oder Platte angebrachten Matte besteht. In der EP 0 453 877 A1 ist ein Verfahren zur Herstellung von multifunktionalen Verkleidungsteilen beschrieben. Ein Schichtaufbau aus zwei Vliesen und einer dazwischen gelegten Sperrschicht aus Polyethylen wird unter Erwärmung einseitig verdichtet, wobei zur Erzielung von Schallabsorption die Sperrschicht durch Schmelzen einen Lochanteil von mindestens 30 % bildet.

Der Erfindung liegt die Aufgabe zugrunde, die Schallverhältnisse in Fahrzeugräumen, wie Fahrzeuginnenräumen, Kofferräumen, Laderäumen und dergleichen zu verbessern.

Die Erfindung ist dadurch gekennzeichnet, daß die Folie in ungeformtem Zustand ein Flächengewicht von 500 bis 3000 g/m² besitzt, die Perforationen eine Öffnungsfläche von jeweils 0,5 bis 5 mm² besitzen und der Öffnungsanteil der Perforationen ca. 0,3 bis 8 % der Fläche der perforierten Bereiche der Folie beträgt. Dabei ist der mindestens eine Oberflächenbelag, vorzugsweise ist auch ein zweiter Oberflächenbelag frei von Perforationen und überdeckt die Perforationen der Folie.

Durch die erfindungsgemäße Ausgestaltung des Schichtkörpers erhalten Innenauskleidungsteile für Kraftfahrzeuge hervorragende schalldämpfende Eigenschaften, die sich auf die Verhinderung bzw. Beseitigung von Geräuschen in Fahrzeugräumen positiv auswirken. Es wurde gefunden, daß in den Innenraum von Kraftfahrzeugen eingedrungener oder dort erzeugter Schall durch die Perforationen der Folie hindurchzudringen vermag. Da die Innenauskleidungsteile bei Kraftfahrzeugen in der Regel dahinter liegende Unebenheiten und Hohlräume abdecken, können diese Hohlräume dazu ausgenutzt werden, um den Luftschall aufzunehmen und zu vernichten. Dies ist besonders vorteilhaft bei Innenauskleidungen von Kofferräumen. Da sie in der Regel den Kofferraumboden und/oder die Seitenwände eines Kofferraumes auskleiden, stehen realtiv große Flächen zur Luftschallabsorption zur Verfügung. Die erfindungsgemäßen Schichtkörper sind vorzugsweise dreidimensional geformt, das heißt aus der ursprünglichen Ebene der Folie in mindestens eine, vorzugsweise in mehreren Richtungen geformt, so daß dreidimensionale Körper vorliegen.

Dadurch, daß es gemäß einer bevorzugten Ausführungsform der Erfindung vorgesehen ist, daß mindestens ein Oberflächenbelag, insbesondere ein sichtbarer Oberflächenbelag die Perforationen der Folie überdeckt, sind diese Perforationen von außen nicht sichtbar und beeinträchtigen somit den optischen Eindruck der Innenauskleidung nicht.

Die Perforationen sind in der Regel als Löcher ausgebildet und können mit Vorteil einen im wesentlichen kreisrunden Querschnitt aufweisen. Der Öffnungsquerschnitt der Perforationen ist relativ gering. Die Perforationen können einheitliche Größe aufweisen oder verschieden ausgebildet sein. Überraschenderweise hat sich herausgestellt, daß bereits ein relativ geringer Öffnungsanteil an Perforationen im perforierten Bereich der Folie hervorragende schalldämpfende Eigenschaften ergibt. So reicht der Öffnungsanteil von ca. 0,3 bis 8 %, insbesondere 1 bis 6 % der Fläche der perforierten Bereiche aus. Die mechanischen Eigenschaften des Schichtkörpers werden dadurch praktisch nicht beeinträchtigt. Der Durchmesser der Öffnungen kann im Bereich von 1 bis 3 mm, insbesodere 1,1 bis 1,6 mm liegen. Die Perforationen können in regelmäßigen oder unregelmäßigen Abständen zueinander angeordnet sein. Normalerweise liegt der Abstand der Perforationen, gemessen von Perforationsmitte zu Perforationsmitte, bei ca. 0,5 bis 3 cm, insbesondere bei 0,7 bis 1,5 cm. Die Perforationen ergeben besonders im niederfrequenten Bereich eine gute Luftschalldämpfung.

Die erfindungsgemäßen Schichtkörper sind vorzugsweie durch Verformung bei erhöhter Temperatur geformt, insbesondere durch an sich bekanntes Ziehpressen. Dies hat zur Folge, daß Perforationen an geformten Stellen der Folie in Abhängigkeit von der Verformung der Folie deformiert sind. Die Oberflächenbeläge, die Verformungen mitmachen, sind an diesen Stellen entsprechend gedehnt, ohne daß dies von außen sichtbar ist. Die Veränderungen der Perforierungen beim Formungsvorgang können bereits bei der Herstellung der Perforationen berücksichtigt werden. Es können Größe, Anzahl, Form und Anordnung der Perforationen bei der Perforierung der ungeformten Folie so vorbestimmt werden, daß nach der Formung der Folie die gewünschten Schalldämpfungswerte erhalten werden.

Die Kunststoffolie hat im ungeformten Zustand ein Flächengewicht bzw. Schichtgewicht im Bereich von 500 - 3000 g/m², insbesondere im Bereich von 900 - 1600 g/m². Eine textile Oberflächenschicht, die als Dekorschicht verwendet wird, hat in der Regel ein Flächengewicht im Bereich von 100 - 600 g/m², insbesondere 200 - 350 g/m². Eine Oberflächenschicht, die als Schalldämpfung auf der Rückseite verwendet wird hat vorzugsweise ein höheres Flächengewicht je nach gewünschter Schalldämpfung, wobei das Flächengewicht bis zu 1500 g/m² oder mehr betragen kann.

Für die Schalldämpfung werden mit Vorteil textile Nadelvliese verwendet, die aus Abfallfasern aus der Bekleidungsindustrie hergestellt sind, wobei zur vorzugsweisen Ausbildung der Klebeverbindung auch in der Dämpfungsschicht ein Mindestanteil an mit dem Folienmaterial verschmelzbaren Fasern vorgesehen ist. Die Kunsstofffolie kann übliche Füllstoffe enthalten und auch mit einer dünnen, verlorenen Trägerbahn versehen sein.

Die Erfindung betrifft auch ein Verfahren zur Herstellung des erfindungsgemäßen Schichtkörpers. Dabei wird mit Vorteil so vorgegangen, daß zunächst die perforierte Folie hergestellt wird und dann eine thermoplastische Formung der Folie und die Beschichtung mindestens einer Seite mit dem textilen Flächengebilde vorgenommen wird. Vorzugsweise wird mindestens eine Oberfläche einer festen, bereits mit Perforationen versehenen Folie, insbesondere Folienbahn aus einem thermoplastischen Kunststoff durch Oberflächenbeheizung derart auf eine Oberflächentemperatur im Klebrigkeitsbereich des thermoplastischen Kunststoffes gebracht, daß die Temperatur im Inneren der Folie die für die plastische Verformung der Folie erforderliche Temperatur im wesentlichen nicht überschreitet. Dadurch ist es möglich, eine schonende thermische Verklebung des textilen Flächengebildes, das vorzugsweise ein textiles Nadelvlies ist, mit der Oberfläche der perforierten Folie zu erzielen, ohne daß ein schädigendes Temperaturniveau erreicht wird oder ein Wärmestau auftritt. Die Folie und das mindestens eine textile Flächengebilde können gemeinsam bei erhöhter Temperatur geformt werden. Hierzu kann die Verbindung zwischen perforierter Folie und Oberflächenbelag vor und/oder während der Formung der Folie erfolgen. Es ist auch möglich die Verbindung nach Formung der Folie vorzunehmen. Es ist bevorzugt, daß Fasern von mindestens einem Oberflächenbelag mindestens teilweise aus einem im wesentlichen artgleichen thermoplastischen Kunststoff bestehen wie die Folie selbst. Diese vorteilhafte Vorgehensweise ermöglicht es, sortenrein aufgebaute Schichtkörper mit guten akustischen Eigenschaften herzustellen. Randabschnitte und andere Abfälle können dadurch unmittelbar in den Herstellungsprozeß zurückgeführt werden. Auch Innenauskleidungsteile von Kraftfahrzeugen sind bei der Verschrottung von Kraftfahrzeugen leicht zu entsorgen bzw. können wieder recycelt werden.

Die Perforationen werden vorzugsweise ausgebildet während sich die Folie in einem festen Zustand befindet, d.h. nachdem sie nahc ihrer Herstellung durch Extrusion verfestigt ist und bevor die Aufheizung erfolgt ist. Die Lochung kann mit Perforations- oder Stachelwalzen vorgenommen werden. Die Lochungkann über den gesamten Flächenbereich der Folie vorgenommen oder, sofern erwünscht, auf z.B. akustisch bevorzugte Bereiche beschränkt werden.
Weitere Merkmale der Erfindung ergeben sich aus der nachfolgenden Beschreibung von bevorzugten Ausführungsformen in Verbindung mit der Zeichnung und den Unteransprüchen. Hierbei können die einzelnen Merkmale jeweils für sich alleine oder in Kombination miteinander bei einer Ausführungsform der Erfindung verwirklicht sein.

In der Zeichnung zeigen:
- Fig. 1: einen Teilquerschnitt durch einen Schichtkörper nach der Erfindung;
- Fig. 2.: eine schematische Darstellung der Verfahrensweise und der Vorrichtung zur Herstellung des Schichtkörpers und
- Fig. 3: eine andere Ausführungsform der Verfahrensweise und Vorrichtung zur Herstellung des Schichtkörpers.

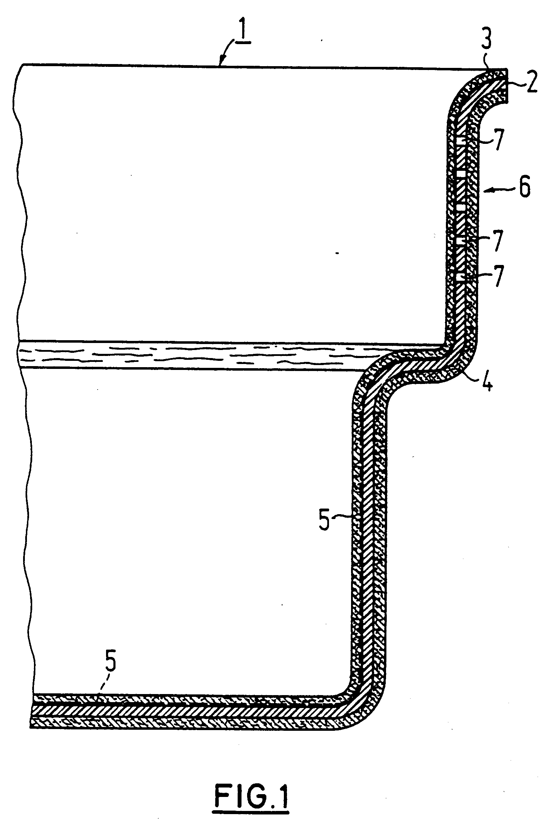

Bei der in Fig. 1 dargestellten Ausführungsform der Erfindung ist eine als Schichtkörper 1 ausgebildete Kofferraum-Innenauskleidung vorgesehen, die aus drei Schichten aufgebaut ist. Eine Trägerschicht 2 aus einer Polypropylenfolie ist durch thermische Verformung aus einem flächigem Material herausgeformt und vorhandenen Formen eines Kofferraumes angepaßt, wodurch ein dreidimensionaler Schichtkörper gebildet ist. Die Trägerschicht 2 ist an beiden Seiten mit einem textilen Nadelvlies als Oberflächenbelag beschichtet. Ein Oberflächenbelag 3 ist als Dekorschicht ausgebildet wogegen ein auf der nicht sichtbaren Seite der Kofferraum-Innenauskleidung vorgesehener Oberflächenbelag als Rückenschicht 4 ausgebildet ist, die zur Schalldämpfung dient. Zwischen der Dekorschicht 3 und der Trägerschicht 2 befindet sich noch eine sehr dünne, Durchbrechungen aufweisende Zwischenschicht 5 die von einer verlorenen Trägerbahn gebildet wird. Sowohl die Dekorschicht 3 als auch die Rückenschicht 4 bestehen aus einem Nadelvlies aus Polypropylenfasern. Das Schichtgewicht des Nadelvlieses der Dekorschicht beträgt ca. 350 g/m², wogegen das Schichtgewicht des Rückenvlieses etwa doppelt so hoch ist. Die beiden Nadelvliese sind mit der Polypropylenfolie durch thermische Verklebung verbunden. Dies bedeutet, daß einzelne Fasern oder Faserkonglomerate, die an der der Folie zugewandten Seite der Nadelvliese liegen, mit der Folienoberfläche versintert sind. Dadurch liegt eine gute Verbindung zwischen den drei Schichten vor, ohne daß ein zusätzlicher Kleber verwendet wurde. Die Zwischenschicht 5 besteht aus einem Polyestervlies in Form eines sehr dünnen und leichten Fasergeleges mit einem Schichtgewicht von 30 g/m². Dieses Fasergelege ist sehr dünn und hat, abgesehen von seinen relativ großen Öffnungen eine Materialstärke vom 1 bis ca. 5-fachen der Faserstärke. Der Loch- bzw. Porenanteil des Fasergeleges liegt bei ca. 90 % und mehr. Die Polypropylenfolie selbst hat an nicht verformten Bereichen ein Schichtgewicht von ca. 1600 g/m². An solchen Stellen, die bei der Verformung gezogen sind, ist es entsprechend geringer.

Der dargestellte Schichtkörper ist somit im wesentlichen sortenrein aufgebaut. Der geringe Anteil an Polyesterfasern, der durch die Trägerbahn 5 eingebracht ist spielt bei der Wiederaufarbeitung des Schichtkörpers keine Rolle und ist vernachlässigbar, zumal die Polyesterfasern sehr dünn sind und bei einem etwaigen Pelletisieren des Schichtkörpers beim Recycling ohnehin zerkleinert werden.

Der sortenreine Aufbau ist besonders von Vorteil, wenn bei der Herstellung des Schichtkörpers viel Verschnitt anfällt, wie dies bei einer Kofferraum-Innenauskleidung der Fall ist. Wegen der komplizierten Formen solcher Kofferraum-Innenauskleidungen kann der Verschnitt bis zu 50 % betragen. Der Verschnitt kann problemlos zur Herstellung von Trägerfolie eingesetzt werden.

Die Trägerschicht 2 besitzt im Seitenwandbereich 6 der Kofferraum-Innenauskleidung Perforationen 7. Die Löcher der Perforationen haben dabei einen Durchmesser von ca. 1 - 2 mm und befinden sich in Abständen von 0,5 - 2 cm voneinander, wobei die Löcher in den Bereichen, in denen die Polypropylenfolie gezogen ist, abweichend von der ursprünglichen Kreisform entsprechend deformiert und vergrößert sind. Die Zwischenschicht 5 ist in den gezogenen Bereichen der Folie desintegriert. D.h. der Faserverbund ist in diesen Bereichen teilweis oder vollstänig aufgelöst. Die Nadelvliese der Dekorschicht 3 und der Rückenschicht 4 haben die Verformung der Trägerfolie vollständig mitgemacht und sind an den Stellen, an denen die Folie gezogen bzw. gedehnt ist, in entsprechender Weise gedehnt, ohne daß dies an der Oberfläche sichtbar ist. Die in der Trägerschicht vorgesehenen Perforationen sind von der Dekorschicht überdeckt und nicht sichtbar. In den Kofferraum eingedrungener Luftschall kann durch die Löcher der Perforationen 7 in dahintergelegene abgedeckte Räume des Kofferraumes eindringen und läuft sich in diesen Räumen tot. Dadurch wird eine wirkungsvolle Schallabsorption erzielt. Entsprechend dient die Rückenschicht 4 hauptsächlich zur Schalldämpfung. Die Trägerschicht verhindert an den unperforierten Stellen, daß Schall, der durch Öffnungen in der Karosserie, z.B. an Stellen der Zwangsentlüftung, von außen in das Fahrzeuginnere eindringt, durch die Kofferraum-Innenauskleidung in das Innere des Kofferraumes eindringen kann.

Es ist auch möglich, in einzelne Oberflächenschichten nur einen Anteil an mit dem Folienmaterial verklebbarem Fasermaterial vorzusehen oder auch nur eine Oberflächenschicht mit der Trägerfolie durch thermische Verklebung zu verbinden. Vorzugsweise wird der Anteil an Fremdfasern jedoch so gering gehalten, daß eine Wiederverwertung des gesamten Schichtkörpers durch thermoplastische Verarbeitung möglich bleibt.

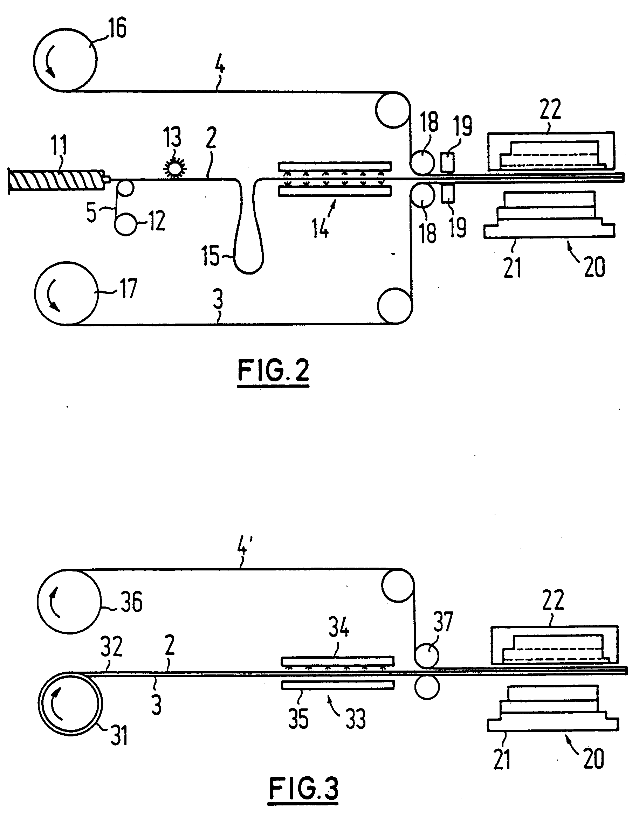

Fig. 2 zeigt in schematischer Darstellung eine Einrichtung zur Herstellung des erfindungsgemäßen Schichtkörpers und die damit verbundene Arbeitsweise. Die Trägerschicht 2 wird aus einem Extruder 11 als Endlosbahn extrudiert und tritt aus einer nicht dargestellten Breitschlitzdüse des Extruders als plastische leicht verformbare Polypropylenendlosbahn aus. Dieser Bahn wird von unten von einer Vorratsrolle 12 ein bahnförmiges Fasergelege zugeführt, das die Trägerbahn bzw. die Zwischenschicht 5 bildet. Beim Zusammenführen der Trägerbahn mit der noch heißen Polypropylenbahn werden die Polyesterfasern der Trägerbahn mit dem weichen Polypropylen teilweise in dieses eingebettet. Dadurch wird eine gute Verbindung zwischen der Trägerbahn und der Polypropylenfolie erhalten, wobei die Fasern der Trägerbahn in Folge der Temperaturstabilität der Polyesterfasern nicht verändert werden. Die so hergestellte mit der Trägerbahn 5 verbundene Polypropylenfolie 2 kann nach dem Abkühlen und Verfestigen aufgerollt und zwischengelagert werden. Die Rolle kann dann bei der Weiterverarbeitung als Vorratsrolle dienen. Es ist aber auch möglich, die Trägerbahn unmittelbar der Verarbeitung zuzuführen, wie dies in Fig. 2 dargestellt ist. Dort wird die abgekühlte Trägerbahn zunächst mit Hilfe einer Perforationswalze 13 mit einer Lochung versehen, die gleichzeitig eine Randlochung zum Festhalten der Bahn in einer nachfolgenden Heizeinrichtung 14 umfassen kann. Vor der Heizeinrichtung 14 ist die Bahn der Trägerschicht zweckmäßigerweise in eine Ausgleichsschlaufe 15 gelegt, die zum Ausgleich des Übergangs von der kontinuierlichen Extrusion zur diskontinuierlichen Aufheizung und Formung bietet.

Die Heizeinrichtung 14 arbeitet mit Infrarotstrahlern und ist bei der dargestellten Ausführungsform zur beidseitigen Oberflächenbeheizung ausgerüstet. In der Heizeinrichtung wird ein Bahnabschnitt aufgeheizt, der im wesentlichen der Größe eines für die Herstellung einer Kofferraum-Innenauskleidung dienenden Abschnittes entspricht. Die Oberflächenbeläge, nämlich die Dekorschicht 3 und die Rückenschicht 4 werden von Vorratsrollen 17 bzw. 16 abgezogen und gleichzeitig beidseitig mit der aufgeheizten Trägerschicht vereinigt. Die Vereinigung und die Verbindung erfolgt vorzugsweise über Umlenkrollen 18, die gleichzeitig als Anpreßwalzen dienen. Hierzu können auch zusätzliche Klemmbacken 19 vorgesehen sein. Durch die Beheizung werden die Oberflächen der Trägerschicht 2 stärker aufgeheizt als das Folieninnere. Nach Beendigung der Aufheizung ist die Folienoberfläche soweit erweicht, daß sie eine thermoplastische Verklebung mit den Polypropylenfasern der Dekorschicht 3 und der Rückenschicht 4 einzugehen vermag. Dabei ist der Folienkern noch so fest, daß er den zur Verbindung der drei Schichten vorgesehenen Auspreßdruck auszuhalten vermag. Gleichzeitig ist der Folienkern aber so stark erhitzt, daß seine Temperatur im Umformungsbereich von Polypropylen liegt, so daß die Umformung des noch flachen Schichtkörpers unmittelbar im Anschluß der Vereinigung der drei Schichten in einer Ziehpresse 20 erfolgen kann. Diese weist eine Patrize 21 und eine Matrize 22 auf, die ständig temperiert, insbesondere gekühlt sind. Die Kühlung bewirkt einen Schutz der Nadelvliese der Oberflächenschichten und gleichzeitig eine Verfestigung der Trägerschicht, nachdem der flache Schichtkörper zu einem dreidimensionalen Schichtkörper umgeformt ist. Ein Randbeschnitt des fertigen Schichtkörpers kann gleichzeitig mit dem Ziehpressen oder danach vorgenommen werden.

Bei der in Fig. 3 dargestellten Ausführungsform ist eine Vorratsrolle 31 vorgesehen, auf der sich ein Vorrat an Polypropylenfolie befindet, die bereits mit einem Oberflächenbelag 3 aus einem Dekorvlies und einer Trägerbahn verbunden ist, die später die Zwischenschicht 5 bildet. Diese Trägerbahn befindet sich zwischen der Bahn der Trägerschicht 2 und der Bahn der Dekorschicht 3. Dieser vorgebildete Schichtkörper 32 wird schrittweise einer Heiz/Kühleinrichtung 33 zugeführt, die an ihrer Oberseite eine Infrarotheizeinrichtung 34 zum Erhitzen der freiliegenden Oberfläche der Trägerschicht aufweist und an ihrer Unterseite eine Kühleinrichtung 35 zum gleichzeitigen Abkühlen der auf der anderen Seite befindlichen Dekorschicht 3. Die Beheizung erfolgt wiederum in der Weise, daß die für die Klebeverbindung vorgesehene Oberfläche der Trägerschicht auf eine Temperatur im Bereich von ca. 180° C gebracht wird, wogegen der Folienkern und die andere Seite der Trägerschicht eine im Umformungsbereich liegende Temperatur von 140 - 160° C nicht übersteigt. Eine Rückenschicht 4' wird als Bahnmaterial von einer Vorratsrolle 36 abgezogen, und diese Rückenschicht ist ein Nadelvlies, das vollständig aus Polypropylenfasern oder aus Fremdfasern und einem zur Ausbildung der Klebeverbindung ausreichenden Mindestanteil an Polypropylenfasern besteht. Die Verbindung der Rückenschicht 4 mit dem vorgebildeten Schichtkörper 32 erfolgt ähnlich wie bei der Ausführungsform nach Fig. 2 über ein Walzenpaar 37. Auch die Formung des noch flachen Verbundkörpers zu einem dreidimensionalen Schichtkörper erfolgt mittels einer Ziehpresse 20 mit Patrize 21 und Matrize 22.

## Patentansprüche

1. Geformter Schichtkörper (1), insbesondere Innenauskleidungsteil für Kraftfahrzeuge, mit einer Trägerschicht (2) aus einer im wesentlichen steifen mindestens an Flächenbereichen Perforationen (7) aufweisenden Folie aus einem thermoplastischen Kunststoff und mindestens einem Oberflächenbelag (3, 4) aus einem textilen Flächengebilde, dadurch gekennzeichnet, daß die Folie (2) in ungeformtem Zustand ein Flächengewicht von 500 bis 3000 g/m² besitzt, die Perforationen (7) eine Öffnungsfläche von jeweils 0,5 bis 5 mm² besitzen und der Öffnungsanteil der Perforationen (7) ca. 0,3 bis 8 % der Fläche der perforierten Bereiche der Folie (2) beträgt.

2. Schichtkörper nach Anspruch 1, dadurch gekennzeichnet, daß mindestens ein Oberflächenbelag (3), vorzugsweise auch ein zweiter Oberflächenbelag (4) frei von Perforationen ist und die Perforationen (7) der Folie (2) überdeckt.

3. Schichtkörper nach Anspruch 1 oder 2, dadurch gekennzeichnet, daß die Perforationen (7) als Löcher, vorzugsweise mit im wesentlichen kreisrundem Querschnitt, ausgebildet sind.

4. Schichtkörper nach einem der vorhergehenden Ansprüche, dadurch gekennzeichnet, daß das Flächengewicht der Oberflächenschicht (3) im Bereich von 100 bis 600 g/m², insbesondere 200 bis 350 g/m², liegt.

5. Schichtkörper nach einem der vorhergehenden Ansprüche, dadurch gekennzeichnet, daß der Öffnungsanteil der Perforationen (7) 1 bis 6 % der Fläche der perforierten Bereiche der Folie (2) beträgt.

6. Schichtkörper nach einem der vorhergehenden Ansprüche, dadurch gekennzeichent, daß die Perforationen (7), insbesondere die Löcher, einen Durchmesser von ca. 1 bis 3, insbesondere 1,1 bis 1,6 mm besitzen.

7. Schichtkörper nach einem der vorhergehenden Ansprüche, dadurch gekennzeichnet, daß der Abstand der Perforationen (7) voneinander, von Perforationsmitte zu Perforationsmitte gemessen, ca. 0,5 bis 3 cm, vorzugsweise 0,7 bis 1,5 cm beträgt.

8. Schichtkörper nach einem der vorhergehenden Ansprüche, dadurch gekennzeichnet, daß Perforationen (7) an geformten Stellen der Folie in Abhängigkeit von der Verformung der Folie (2) deformiert sind.

9. Schichtkörper nach einem der vorhergehenden Ansprüche, dadurch gekennzeichnet, daß Perforationen (7) in solchen Bereichen der Folie (2) vorgesehen sind, die zur Abdeckung von zur Schallabsorption geeigneten Hohlräumen dienen.

10. Schichtkörper nach einem der vorhergehenden Ansprüche, dadurch gekennzeichnet, daß die Perforationen (7) durch Lochung, insbesondere Stanzung gebildet sind.

11. Schichtkörper nach einem der vorhergehenden Ansprüche, dadurch gekennzeichnet, daß Fasern von mindestens einem Oberflächenbelag (3, 4) mindestens teilweise aus einem im wesentlichen artgleichen thermoplastischem Kunststoff bestehen wie die Folie (2) und der Oberflächenbelag (3, 4) durch thermische Verklebung dieser Fasern mit der Folie (2) verbunden ist.

12. Schichtkörper nach Anspruch 11, dadurch gekennzeichnet, daß zwei textile Oberflächenbeläge (3, 4) vorgesehen sind, die vorzugsweise beide durch thermische Verklebung mit der Folie verbunden sind.

13. Schichtkörper nach einem der vorhergehenden Ansprüche, dadurch gekennzeichnet, daß mindestens ein Oberflächenbelag (3, 4), insbesondere eine Dekorschicht (3), aus im wesentlichen gleichen Material wie die Folie, insbesondere aus Polypropylen, besteht.

14. Schichtkörper nach einem der vorhergehenden Ansprüche, dadurch gekennzeichnet, daß die Folie (2) und mindestens ein Oberflächenbelag (3, 4) aus thermoplastischen Polymeren besteht, die beim Aufschmelzen der Folie, insbesondere bei einer Wiederaufarbeitung, eine gemeinsame Schmelze zu bilden vermögen.

15. Schichtkörper nach einem der vorhergehenden Ansprüche, dadurch gekennzeichnet, daß er im wesentlichen sortenrein aufgebaut ist.

16. Schichtkörper nach einem der vorhergehenden Ansprüche, dadurch gekennzeichnet, daß der bzw. die Oberflächenbeläge (3, 4) luftdurchlässig sind.

17. Verfahren zur Herstellung des geformten Schichtkörpers nach einem der vorhergehenden Ansprüche, bei dem die Folie thermoplastisch verformt und auf mindestens einer Seite mit dem Oberflächenbelag verbunden wird, dadurch gekennzeichnet, daß eine selbsttragende Folie aus thermoplastischem Kunststoff in im wesentlichen kaltem Zustand mindestens bereichsweise perforiert wird und die perforierte Folie bei erhöhter Temperatur im Verformungsbereich des thermoplastischen Kunststoffs geformt wird, wobei die Verbindung mit dem Oberflächenbelag nach Perforierung und vor, während oder nach der Formung vorgenommen wird.

18. Verfahren nach dem Oberbegriff von Anspruch 17, dadurch gekennzeichnet, daß mindestens eine Oberfläche einer Perforationen aufweisenden festen Folie, insbesondere Folienbahn aus einem thermoplastischen Kunststoff durch Oberflächenbeheizung derart auf eine Oberflächentemperatur im Klebrigkeitsbereich des thermoplastischen Kunststoffes gebracht wird, daß die Temperatur im Inneren der Folie die für die plastische Verformung der Folie erforderliche Temperatur im wesentlichen nicht überschreitet, wobei die Oberflächentemperatur für eine thermische Verklebung und die Temperatur im Innern für eine thermoplastische Verformung ausgenutzt werden.

19. Verfahren nach Anspruch 17 oder 18, dadurch gekennzeichnet, daß als Oberflächenbelag ein textiles Flächengebilde, insbesondere ein Nadelvlies, verwendet wird, dessen Fasern mindestens zum Teil aus einem artgleichen Kunststoff bestehen wie die Folie, wobei der Schmelzbereich der Kunststoffe im wesentlichen der gleiche ist.

20. Verfahren nach einem der Ansprüche 17 bis 20, dadurch gekennzeichnet, daß eine Folie aus Polypropylen verwendet wird und die Folie mindestens einseitig auf eine Oberflächentemperatur von ca. 180° C aufgeheizt wird.

21. Verfahren nach Anspruch 20, dadurch gekennzeichnet, daß die Aufheizung der Folienoberfläche derartig gesteuert wird, daß der Folienkern eine Temperatur im Bereich von 140 - 160° C nicht überschreitet.

22. Verfahren nach einem der Ansprüche 17 bis 21, dadurch gekennzeichnet, daß die Folie nur einseitig beheizt wird, wobei vorzugsweise die nichtbeheizte andere Seite gleichzeitig temperiert, insbesondere gekühlt wird.

23. Verfahren nach einem der Ansprüche 17 bis 22, dadurch gekennzeichnet, daß der mindestens eine Oberflächenbelag der erhitzten Oberseite der Folie ohne Vorwärmung, insbesondere im wesentlichen bei Umgebungstemperatur, zugeführt wird.

24. Verfahren nach einem der Ansprüche 17 bis 23, dadurch gekennzeichnet, daß die Perforationen in Abhängigkeit vom Materialfluß der Folie beim Formen in ihrer Gestalt verändert, insbesondere aufgeweitet werden.

25. Verfahren nach einem der Ansprüche 17 bis 24, dadurch gekennzeichnet, daß eine Folie verwendet wird, bei der die Perforationen entsprechend den nach der Verformung gewünschten Luftschallabsorptionseigenschaften des fertigen Formkörpers hinsichtlich Lochgröße, Lochform und Lochanordnung vorgebildet sind.

## Claims

1. Shaped laminate (1), particularly an internal lining part for motor vehicles, with a support layer (2) formed by a substantially stiff sheet of a thermoplastic material which, at least in surface areas, has perforations (7), and at least one surface layer (3, 4) of a textile fabric, characterized in that in the unshaped state the sheet (2) has a weight per unit area of 500 to 3000 g/m², the perforations (7) have an opening surface of in each case 0.5 to 5 mm² and the opening proportion of the perforations (7) is approximately 0.3 to 8% of the surface of the perforated areas of the sheet (2).

2. Laminate according to claim 1, characterized in that at least one surface layer (3), preferably also a second surface layer (4), is free from perforations and covers the perforations (7) of sheet (2).

3. Laminate according to claim 1 or 2, characterized in that the perforations (7) are constructed as holes, preferably having a substantially circular cross-section.

4. Laminate according to one of the preceding claims, characterized in that the weight per unit area of the surface layer (3) is in the range 100 to 600 g/m², particularly 200 to 350 g/m².

5. Laminate according to one of the preceding claims, characterized in that the opening proportion of the perforations (7) is 1 to 6% of the surface of the perforated areas of the sheet (2).

6. Laminate according to one of the preceding claims, characterized in that the perforations (7), particularly the holes, have a diameter of approximately 1 to 3, particularly 1.1 to 1.6 mm.

7. Laminate according to one of the preceding claims, characterized in that the mutual spacing of the perforations (7), measured from perforation centre to perforation centre, is approximately 0.5 to 3 cm, preferably 0.7 to 1.5 cm.

8. Laminate according to one of the preceding claims, characterized in that the perforations (7) are deformed on shaped points of the sheet as a function of the deformation of the sheet (2).

9. Laminate according to one of the preceding claims, characterized in that perforations (7) are provided in those areas of the sheet (2), which are intended to cover the cavities appropriate for sound absorption.

10. Laminate according to one of the preceding claims, characterized in that the perforations (7) are made by a perforating and in particular a punching process.

11. Laminate according to one of the preceding claims, characterized in that fibres of at least one surface layer (3, 4) are at least partly formed from substantially the same type of thermoplastic material as the sheet (2) and the surface layer (3, 4) is joined by the thermal bonding of said fibres to the sheet (2).

12. Laminate according to claim 11, characterized in that two textile surface layers (3, 4) are provided, which are preferably in each case connected by thermal bonding to the sheet.

13. Laminate according to one of the preceding claims, characterized in that at least one surface layer (3, 4), particularly a decorative layer (3), is made from essentially the same material as the sheet and in particular polypropylene.

14. Laminate according to one of the preceding claims, characterized in that the sheet (2) and at least one surface layer (3, 4) is made from thermoplastic polymers, which during the melting of the sheet, particularly during reprocessing, are able to form a common melt.

15. Laminate according to one of the preceding claims, characterized in that it is built up in a substantially type-pure manner.

16. Laminate according to one of the preceding claims, characterized in that the surface layer or layers (3, 4) are permeable to air.

17. Process for the production of a shaped laminate according to one of the preceding claims, in which the sheet is thermoplastically deformed and joined on at least one side to the surface layer, characterized in that a self-supporting, thermoplastic material sheet is at least zonally perforated in a substantially cold state and the perforated sheet is shaped at elevated temperature in the deformation range of the thermoplastic material, the joining to the surface layer taking place after perforation and before, during or after shaping.

18. Process according to the preamble of claim 17, characterized in that at least one surface of a firm sheet having perforations and in particular a sheet web of a thermoplastic material is brought by surface heating to a surface temperature in the tackiness range of the thermoplastic material so that the temperature in the interior of the sheet does not significantly exceed the temperature required for the plastic deformation of the sheet, the surface temperature being utilized for a thermal bonding and the temperature in the interior for a thermoplastic deformation.

19. Process according to claim 17 or 18, characterized in that the surface layer is constituted by a textile fabric, particularly a needle web, whose fibres at least partly are formed from the same type of plastic as the sheet, the melting range of the plastics being substantially the same.

20. Process according to one of the claims 17 to 19, characterized in that a polypropylene sheet is used and the sheet is heated on at least one side to a surface temperature of approximately 180°C.

21. Process according to claim 20, characterized in that the heating of the sheet surface is controlled in such a way that the sheet core does not exceed a temperature in the range 140 to 160°C.

22. Process according to one of the claims 17 to 21, characterized in that the sheet is only heated on one side and preferably the unheated, other side is simultaneously thermostatically controlled and in particular cooled.

23. Process according to one of the claims 17 to 22, characterized in that at least one surface layer is supplied to the heated top of the sheet without preheating and in particular substantially at ambient temperature.

24. Process according to one of the claims 17 to 23, characterized in that the perforations undergo a shape change and are in particular widened as a function of the material flow of the sheet during shaping.

25. Process according to one of the claims 17 to 24, characterized in that use is made of a sheet, in which the perforations are made beforehand so that the size, shape and arrangement of the holes corresponds to the airborne sound absorption characteristics of the finished article required following deformation.

## Revendications

1. Corps moulé stratifié (1), en particulier, habillage d'intérieur de véhicules automobiles, comprenant une couche porteuse (2) composée d'une feuille sensiblement rigide en matière synthétique thermoplastique, présentant au moins aux zones de surface des perforations (7), et comprenant au moins un revêtement de surface (3, 4) réalisé en une structure de surface textile, caractérisé ence que la feuille (2) possède à l'état non moulé un poids spécifique de 500 à 3000 g/m², les perforations (7) une surface d'ouverture de respectivement 0,5 à 5 mm² et la part d'ouverture des perforations (7) représente environ 0,3 à 8 % de la surface des zones perforées de la feuille (2).

2. Corps stratifié selon la revendication 1, caractérisé en ce qu'au moins un revêtement de surface (3), de préférence également un second revêtement de surface (4) doit être exempt de perforations et recouvrir les perforations (7) de la feuille (2).

3. Corps stratifié selon la revendication 1 ou 2, caractérisé en ce que les perforations (7) ont la forme de trous, de préférence de section transversale sensiblement ronde et circulaire.

4. Corps stratifié selon l'une des revendications précédentes, caractérisé en ce que le poids spécifique de la couche de surface (3) est compris entre 100 et 600 g/m², en particulier 200 à 350 g/m².

5. Corps stratifié selon l'une des revendications précédentes, caractérisé en ce que la part d'ouverture des perforations (7) représente de 1 à 6 % de la surface des zones perforées de la feuille (2).

6. Corps stratifié selon l'une des revendications précédentes, caractérisé en ce que les perforations (7), en particulier les trous, possèdent un diamètre compris environ entre 1 et 3mm, en particulier 1,1 à 1,6 mm.

7. Corps stratifié selon l'une des revendications précédentes, caractérisé en ce que la distance séparant les perforations (7) les unes des autres, qui est mesurée d'un centre de perforation à l'autre, est comprise environ entre 0,5 et 3 cm, de préférence 0,7 et 1,5 cm.

8. Corps stratifié selon l'une des revendications précédentes, caractérisé en ce que des perforations (7) sont déformées à des emplacements moulés de la feuille en fonction de la déformation de la feuille (2).

9. Corps stratifié selon l'une des revendications précédentes, caractérisé en ce qu'il est prévu dans ces zones de la feuille (2) des perforations (7) servant à recouvrir les cavités appropriées pour l'absorption acoustique.

10. Corps stratifié selon l'une des revendications précédentes, caractérisé en ce que les perforations (7) sont réalisées par poinçonnage de préférence par perforation.

11. Corps stratifié selon l'une des revendications précédentes, caractérisé en ce que les fibres d'au moins un revêtement de surface (3, 4) se composent au moins partiellement d'une matière synthétique thermoplastique de nature sensiblement similaire à celle de la feuille (2) et en ce que le revêtement de surface (3,4) est relié par collage thermique de ces fibres avec la feuille (2).

12. Corps stratifié selon la revendication 11, caractérisé en ce qu'il est prévu deux revêtements textiles de surface (3,4) qui sont reliés de préférence tous les deux par collage thermique avec la feuille.

13. Corps stratifié selon l'une des revendications précédentes, caractérisé en ce qu'au moins un revêtement de surface (3, 4), en particulier une couche décorative (3), se compose sensiblement du même matériau que la feuille, en particulier du polypropylène.

14. Corps stratifié selon l'une des revendications précédentes, caractérisé en ce que la feuille (2) et au moins un revêtement de surface (3,4) se composent de polymères thermoplastiques qui sont en mesure lors de la fusion de la feuille, en particulier au cours d'un recyclage, de constituer une fonte commune.

15. Corps stratifié selon l'une des revendications précédentes, caractérisé en ce qu'il est principalement conçu de qualité pure.

16. Corps stratifié selon l'une des revendications précédentes, caractérisé en ce que le ou les revêtements de surface (3, 4) sont perméables à l'air.

17. Procédé pour la fabrication du corps stratifié moulé selon l'une des revendications précédentes, selon lequel la feuille est déformée par thermoplastie et est reliée, au moins sur une face, au revêtement de surface, caractérisé en ce qu'une feuille autoporteuse en matière synthétique thermoplastique est perforée au moins par zone à l'état sensiblement froid et en ce que la feuille perforée est moulée à température élevée dans la zone de déformation de la matière synthétique thermoplastique, la liaison avec le revêtement de surface étant effectuée après la perforation et avant, pendant ou après le moulage.

18. Procédé selon le préambule de la revendication 17, caractérisé en ce qu'au moins une surface d'une feuille rigide présentant des perforations, en particulier une feuille en bande en matière synthétique thermoplastique est amenée à une température de surface dans la zone de collage de la matière synthétique thermoplastique de sorte que la température à l'intérieur de la feuille ne dépasse sensiblement pas la température nécessaire à la déformation plastique, la température de surface étant exploitée pour un collage thermique et la température intérieure pour une déformation thermoplastique.

19. Procédé selon la revendication 17 ou 18, caractérisé en ce qu'en tant que revêtement de surface, on a recours à une structure de surface textile, en particulier un non-tissé aiguilleté, dont les fibres se composent au moins en partie d'une matière synthétique similaire à celle de la feuille, la zone de fusion des matières synthétique étant sensiblement identique.

20. Procédé selon l'une des revendications 17 à 19 caractérisé en ce qu'on utilise une feuille en polypropylène et que la feuille est chauffée au moins sur face à une température de surface d'environ 180°C.

21. Procédé selon la revendication 20, caractérisé en ce que le chauffage de la surface de la feuille est ajusté de sorte que le coeur de la feuille ne dépasse pas une température comprise entre 140 et 160 °C.

22. Procédé selon l'une des revendications 17 à 21, caractérisé en ce que la feuille n'est chauffée que sur une face, l'autre face non chauffée étant de préférence maintenue en même temps à une température tempérée, en particulier refroidie.

23. Procédé selon l'une des revendications 17 à 22, caractérisé en ce qu'au moins un revêtement de surface est amené sans préchauffage à la face supérieure chauffée de la feuille, en particulier sensiblement à la température ambiante.

24. Procédé selon l'une des revendications 17 à 23, caractérisé en ce que les perforations modifient leur forme en fonction de l'écoulement du matériau de la feuille au moment du moulage, en particulier s'élargissent.

25. Procédé selon l'une des revendications 17 à 24, caractérisé en ce qu'on utilise une feuille où les perforations sont prémoulées en fonction des propriétés souhaitées d'absorption des bruits transmis par l'air du corps moulé fini, en ce qui concerne la dimension des trous, leur forme et leur disposition.
